Europäisches Patentamt

European Patent Office

Office européen des brevets

(11) Publication number: **0 049 587**
**B1**

# EUROPEAN PATENT SPECIFICATION

(45) Date of publication of patent specification: **15.01.86**

(51) Int. Cl.⁴: **B 60 D 1/00, B 62 D 53/00, B 60 G 11/26, B 62 D 53/08**

(21) Application number: **81304408.8**

(22) Date of filing: **24.09.81**

(54) Hitch.

(30) Priority: **07.10.80 GB 8032256**
**13.04.81 GB 8111485**
**24.07.81 GB 8122865**

(43) Date of publication of application:
**14.04.82 Bulletin 82/15**

(45) Publication of the grant of the patent:
**15.01.86 Bulletin 86/03**

(84) Designated Contracting States:
**AT BE CH DE FR IT LI LU NL SE**

(56) References cited:
**AU-B- 450 455**
**GB-A- 664 799**
**US-A-2 440 502**
**US-A-2 447 659**
**US-A-2 460 466**
**US-A-2 500 686**
**US-A-2 506 718**
**US-A-2 570 482**
**US-A-2 634 986**
**US-A-2 733 931**
**US-A-3 995 876**

(73) Proprietor: **Towbile Technology Limited**
**Napier Cottage Downs Hill**
**Golant Fowey Cornwall (GB)**

(72) Inventor: **Sheldrake, Ernest James**
**2 Lowick Close**
**East Dercham, Norfolk NR19 1EJ (GB)**

(74) Representative: **Nash, Keith Wilfrid**
**KEITH W. NASH & Co. Pearl Assurance House**
**90-92 Regent Street**
**Cambridge CB2 1DP (GB)**

Courier Press, Leamington Spa, England.

## Description

### Field of Invention

This invention concerns a hitch for attaching an item of equipment to be towed, such as a caravan or trailer, to a towing vehicle, such as a car.

### Background to the Invention

A ball and socket hitch for caravans and trailers is already known and has been used for many years. In the known device, the ball is carried by a mounting plate attached to the rear of the towing vehicle and the socket is rotatably mounted at the end of a towing arm extending forwardly from the caravan or trailer. The socket is formed with a catch by which it can be secured in place over the ball so that there is little tendency for the socket to jump off the ball whilst a vehicle is being towed. On the other hand the ball does permit freedom of movement between the towing vehicle and the towed vehicle and it has always been assumed that the high degree of relative movement made possible by a ball and socket joint is a prerequisite of a satisfactory towing connection between a vehicle such as a car and a caravan.

On the other hand, experience has shown that, particularly at high speeds, a ball and socket joint does not form a stable connection between a car and a caravan for example. Considerable swaying of a caravan from side to side can be experienced whilst travelling at speeds and once a periodic swinging of a caravan from side to side has been set up, it is sometimes very difficult to damp this down simply by slowing the vehicle down.

Various wheeled hitch arrangements have been proposed. For example US Patent No. 2570482, Australian Specification No. 450455 and US Patent No. 2460466 all disclose hitch or dolly arrangements comprising a wheeled framework for connecting between a towing vehicle and an item to be towed. The wheels of the arrangements are provided with suspension, eg in the form of coil or leaf springs. A drawback of such arrangements is that the suspension is not adjustable: this means that such arrangements cannot be adjusted to accommodate variations in towing conditions.

US Patent No. 2440502 discloses a truck or dolly for supporting the front end of a trailer. The dolly comprises a wheeled framework intended to be permanently attached to the front end of a trailer, and incorporating pneumatic suspension means. The suspension means includes a single air cylinder which controls movement at both supporting wheels simultaneously. The arrangement thus has the drawback of not providing independent suspension for the wheels.

It is therefore an object of the present invention to provide an improved hitch for attaching, for example, a caravan or trailer to a towing vehicle such as a motor car.

According to the present invention a hitch for attaching an item or equipment to be towed to a towing vehicle, comprises a framework carried by at least one road wheel or roller for locating between the rear of the towing vehicle and the forward end of the item to be towed; a tow-bar secured with respect to the framework for attachment to the item to be towed; connecting means for detachably joining the framework to the rear of the towing vehicle; and suspension means whereby the or each roadwheel or roller is independently resiliently mounted relative to the framework, characterised by means for varying the resilience of the suspension means to suit the load applied to the hitch by the item to be towed.

In preferred embodiments a single pair of road wheels is provided on the framework. In this case, the wheels of the pair are preferably arranged for independent rotation, eg by being mounted on separate axles, to improve handling characteristics of the hitch, particularly when cornering.

Further, the wheels of the pair are preferably arranged for movement with respect to respective independent vertical axis, again to facilitate handling characteristics and to eliminate 'scuffing' of the tyres on cornering and so improve tyre life. This is conveniently achieved by mounting each wheel to one end of a respective pair of trailing arms, the other end of which is mounted for pivoting about a vertical axis, eg by use of a ball race bearing.

The tow bar is conveniently adapted for connection to a conventional towing frame such as is generally provided at the front end of, say, caravans and trailers. Thus, for example, the tow bar of the hitch may be provided with a towing ball of conventional construction for attachement to a conventional towing socket on the towing frame. Alternatively, a so-called 'fifth wheel' attachment such as is commonly utilised on articulated vehicles may be provided on the tow bar, for attachment to a complementary member on, for example, a caravan towing frame.

The means for joining the framework to the rear of a towing vehicle conveniently comprises an attachment member adapted to be rigidly secured, eg bolted, to one or more mounting plates fixed to the rear of the towing vehicle and also to be rigidly secured to the framework preferably in such a manner that the framework can be quickly and easily detached from the attachment member and hence from the towing vehicle.

A primary advantage of the invention is that the forward weight of the towed item, eg trailer or caravan, is not now supported on the rear of the towing vehicle as in the conventional ball and socket hitch but through the intermediate framework and road wheel(s) attached to the rear of the towing vehicle. By transferring the weight in this way, much of the loading on the towing vehicle is removed which greatly improves the road handling of the towing vehicle and allows a greater load to be towed by the vehicle than would otherwise be the case.

A further advantage of the invention lies in the ease with which a towing vehicle can be hitched and unhitched to, eg a caravan or trailer. Where a simple conventional ball and socket joint is employed, the full forward weight of the towed vehicle has to be borne by the operator as he lifts the socket at the end of the towing arm onto or off the ball. In contrast with the present invention because the forward weight of the towed item is supported by hitch, there is no need to lift this weight during hitching und unhitching.

In a particularly preferred embodiment of the invention, a hitch for attaching an item of equipment to be towed to a towing vehicle, comprises a framework carried out by at least one road wheel or roller for locating between the rear of the towing vehicle and the forward end of the item to be towed, a tow-bar connected to the framework for attachment to the item to be towed, and means for detachably joining the framework to the rear of the towing vehicle, wherein the wheel(s) or roller(s) is/are resiliently mounted relative to the framework by pneumatic suspension means.

The pneumatic suspension means conveniently comprises a piston and cylinder arrangement with an air bag located therebetween. Suitable air inlet and outlet means are provided to enable the pressure of air in the bag to be adjusted to a suitable valve to give an appropriate degree of resilience between the wheel etc, and the framework dependent on the towing vehicle, the item to be towed and the nature of the terrain it is intended to cover.

A particularly suitable type of air bag for this purpose is a 4½″ (115mm) convulate bellow air spring assembly, manufactured by Dunlop.

In a preferred embodiment a single pair of road wheels is provided on the framework, each wheel having associated therewith a respective piston and cylinder arrangement as discussed above.

The two air bags are completely independent of one another, enabling individual regulation of the air pressure thereof.

The two wheels are preferably mounted on separate axles. Further, the wheels are preferably arranged for movement with respect to independent vertical axes by mounting each wheel to one end of a respective pair of trailing arms, or single trailing arm, the other end of which is mounted for pivoting about a vertical axis, eg by use of a ball race bearing.

When only a single 4½″ (115mm) convolute bellow air spring assembly is employed per piston and cylinder arrangement as described above, the arrangement does not permit sufficient movement of the wheel(s) or roller(s) relative to the framework to prevent 'bottoming' in all circumstances. It is accordingly preferably in such cases to use two or more air bags in series in such a piston and cylinder arrangement.

By using two or more suitable air bags appropriately inflated, a hitch can be provided which will permit an appropriately large range of relative movement between the wheel(s) or roller(s) and the framework to prevent 'bottoming' even during use on very rough terrain.

For example, by using two 4½″ (115mm) convolute bellow air spring assemblies, as mentioned above, relative movement of 7″ (180mm) is allowed, which is adequate for most conditions.

A further development concerns the construction of the piston and cylinder assembly. In the embodiments described above, each piston and cylinder assembly comprises an outer tubular housing within which is slidable located an inner cylindrical member, these components being dimensioned to leave a small gap therebetween of, eg 0.15″ (0.3mm), just sufficient to permit lubrication. It is clear that with such an arrangement, the inside diameter of the outer housing and the outside diameter of the inner member must be accurately produced to a high tolerance, placing certain constraints on manufacturing techniques. For instance, the outer housing is conveniently formed by rolling from plate and welding. However, the outer housing cannot be produced by this method with an inside diameter formed to a sufficiently high tolerance to give a good fit between the components.

An alternative approach which has therefore been developed to overcome this problem is to leave a rather larger gap, eg ¼″ (6mm) between the components, with the inner member being formed rather smaller but with an accurately produced outside diameter, eg 4¾″ (120mm), and with the outer housing having a rather less accurately produced inside diameter (eg nominal 5″ (126mm)).

The gap between the components is sealed using suitable sealing rings, eg Tufnol rings, machined to suit the outer housing inside diameter. Lubrication of the preferred Tufnol rings involves watering once a month. It is to be noted in this connection that a rolling process allows accurate control of the outside diameter of a component, but not of the inside diameter.

One preferred embodiment of the invention will now be described by way of example with reference to the accompanying drawings.

In the Drawings

Figure 1 is a perspective view of one embodiment of a hitch in accordance with the present invention;

Figure 2 is a schematic plan view of a car and caravan connected by the hitch shown in Figure 1;

Figure 3 is a schematic side view of the rear of the car and hitch shown in Figure 2;

Figure 4 is a rear view of a two-wheeled hitch in accordance with the present invention;

Figure 5 is a top plan view of part of the hitch illustrated in Figure 4;

Figure 6 is a side view of the hitch illustrated in Figures 4 and 5;

Figure 7 is a side view of a one-wheeled hitch in accordance with the present invention;

Figure 8 is a top plan view of the hitch illustrated in Figure 7, and

Figure 9 is a part section rear view of part of another hitch embodying the present invention.

## Detailed Description of the Drawings

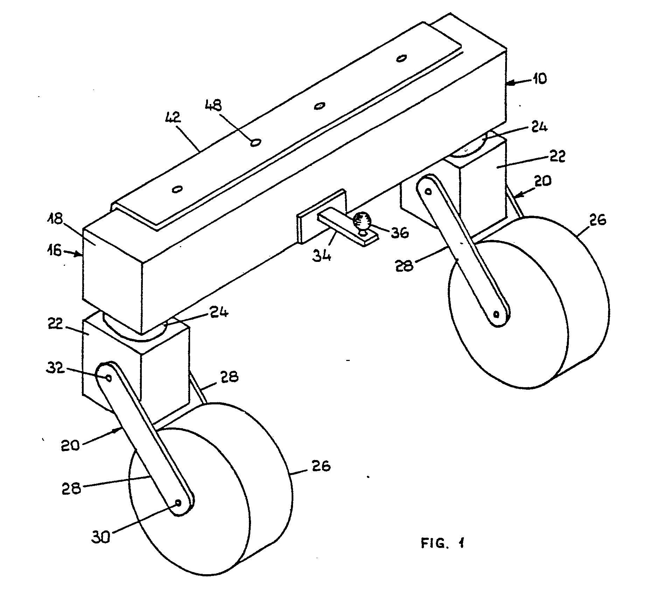

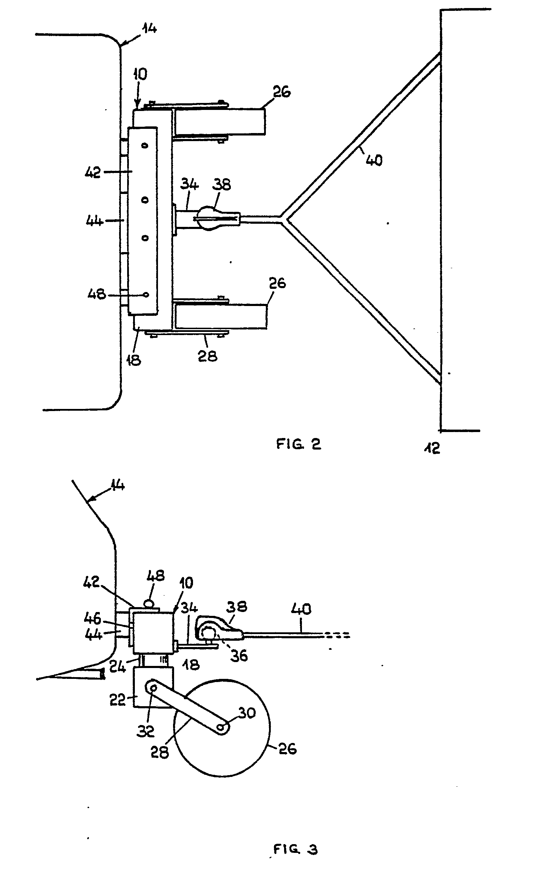

Referring to the drawings, Figure 1 shows a hitch 10 for attaching an item of equipment to be towed to a towing vehicle, for example for attaching a caravan 12 to a car 14 in the manner illustrated in Figures 2 and 3.

The illustrated hitch 10 compises a framework 16 in the form of a square section transverse member 18 which is of hollow configuration with closed off ends and which is conveniently formed of steel or aluminium, possibly being formed by a pressing technique. In this embodiment, transverse member is 685mm (27") long.

A pair of similar wheel assemblies 20 is attached to the base of the member 18, one adjacent to each end thereof. Each assembly 20 comprises a mounting member 22 which is mounted to member 18 by means of a bearing 24 comprising a ball race bearing (not shown) arranged to permit rotation of member 22 about a vertical axis.

Each wheel assembly 20 further comprises a road wheel 26 mounted to the mounting member 22 by means of a pair of trailing arms 28. Each wheel 26 is rotatably mounted to the associated pair of arms 28 upon an axle 30, the arms 28 in turn being pivotally mounted to the associated member 22 by means of a spindle 32.

A respective torque spring (not shown) is mounted in each mounting member 22 so that the wheels 26 are resiliently mounted with respect to the framework 16 so as to provide a degree of shock absorbing and suspension between the road wheels and the framework and so to improve handling of the hitch, particularly when travelling over bumpy terrain. The torque springs are such that in normal use the arms 28 are inclined to horizontal at an angle of approximately 45°.

The road wheels 26 in the present embodiment are commercially available wheels normally used for high performance go-karts, the wheels being 280mm (11") in diameter and having pneumatic tyres with smooth treads. It is, of course, apparent that alternative wheels of suitable dimensions may be used instead.

A tow bar 34 is rigidly secured to the rear wall of the transverse member 18 and is provided at its free end with a conventional towing ball 36 to permit attachment of the hitch 10 to caravan 12 by use of a conventional towing socket 38 provided on a towing frame 40 extending from the front end of the caravan.

In a modified embodiment (not shown) the towing ball may be replaced by a so-called 'fifth wheel' type attachment such as is commonly utilised on articulated vehicles, a complementary member being provided on towing frame 40 in place of socket 38. This arrangement enables automatic coupling of a towing vehicle to, say, a caravan in the manner in which a cab is attached to a trailer in an articulated vehicle without requiring manual manipulation by the user.

An L-section steel mounting member 42 is provided for attaching the transverse member 18 to mounting plates 44 secured to the rear of the car 14. The member 42 is rigidly secured to plates 44 by means of four fixing bolts 46 that are passed through aligned holes in one wall of the member 42 and in the plates 44, two holes being provided in the centrally located plate and one hole in each of the other plates.

The transverse member 18 is in turn releasably attached to the adjacent wall of member 42 by means of four fixing pins 48 passing through aligned apertures in the member 42 and member 18, the pins 48 being secured in position by passing a respective cleat clip (not shown) through an orifice at the lower end of each pin protruding from the base of member 18. In this way the hitch 10 (and caravan 12) may be easily attached to and detached from the car 14 simply by fitting or removing the pins 48, and it is to be noted that no lifting of the front of the caravan 12 is involved.

The hitch 10 is mounted to the rear of the car 14 at such a height that, in normal running, the towing frame 40 is substantially parallel to the ground. For most caravans, the frame 40 is attached at a height above the ground of about 380mm—405mm (15"—16") so that the mounting plates 44 should be attached to the rear of the car 14 at a similar height.

When the caravan 12 has been towed to the desired site the hitch 10 is detached from the mounting member 42 by removing the pins 48 as described above. The car 16, with the member 42 still attached thereto or following unbolting of member 42, may then be driven away. The front end of the caravan 12 thus remains supported by ths hitch 10, although if desired the usual supporting arrangement may be used as well as a safety measure.

In a further modification of the above described arrangement, one or more air bags (not shown) may be incorporated to improve suspension, such bags conveniently being located within the transverse member 18 held in position by suitable guides, with the upper ends thereof passing through apertures in the upper wall of the member 18 and butting against the adjacent wall of the member 42.

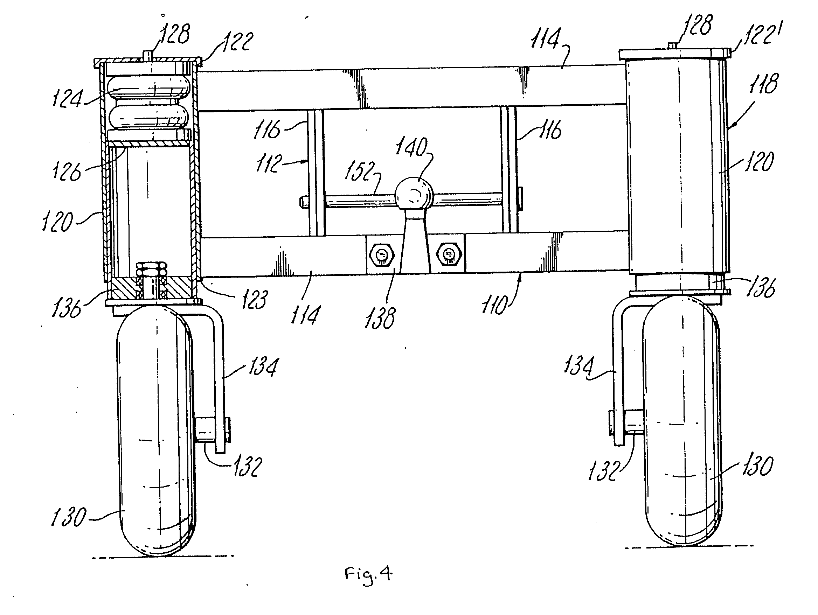

Referring to Figures 4, 5 and 6, there is illustrated a two-wheeled hitch 110 for attaching an item of equipment to be towed to a towing vehicle. The hitch 110 comprises a framework 112 in the form of two square-section transverse members 114 interconnected by two vertically extending mounting plates 116, to be discussed below.

A respective wheel suspension assembly 118 is secured to each end of the framework 112, for example by welding. Each assembly 118 comprises an outer tubular housing 120 within which is slidably located an inner cylindrical member 122 to form a piston and cylinder assembly. There is a small gap between the side walls of the housing 120 and member 122, just sufficient to permit lubrication, eg 0.015" (0.3mm); and a suitable grease and dust sealing arrangement 123 is provided at the base of the housing 120.

The upper end of each tubular housing 120 is closed by means of an end cap 122', and an air bag 124 shown in compressed condition is located within the tubular housing 120, between the end cap 122' and an upper end wall 126 of the inner cylindrical member 122. The air bag 124 used in this embodiment is a $4\frac{1}{2}''$ (115mm) convolute bellow air spring assembly, manufactured by Dunlop. The air bag 124 is secured to the end cap 122' by means of three countersunk screws (not shown) and is secured to the end wall 126 in a similar manner.

A valved inlet/outlet connection extends from the top of each air bag 124 through the associated end cap 122', and terminates in a respective connector 128 to permit inflation and deflation of the air bags. If necessary, an appropriate adaptor (not shown) may be secured to the connector 128 to permit use of suitable pump means, eg a conventional foot pump.

The air bags are for the purpose of providing for shock absorption and suspension, as will be described below.

A respective wheel 130 having a stub-axle 132 is mounted to one end of an associated trailing arm 134, the other end of which is secured to the base of one of the cylindrical members 122 via a ball-race bearing 136. This wheel mounting arrangement thus permits rotation of the wheels through 360° about a vertical axis.

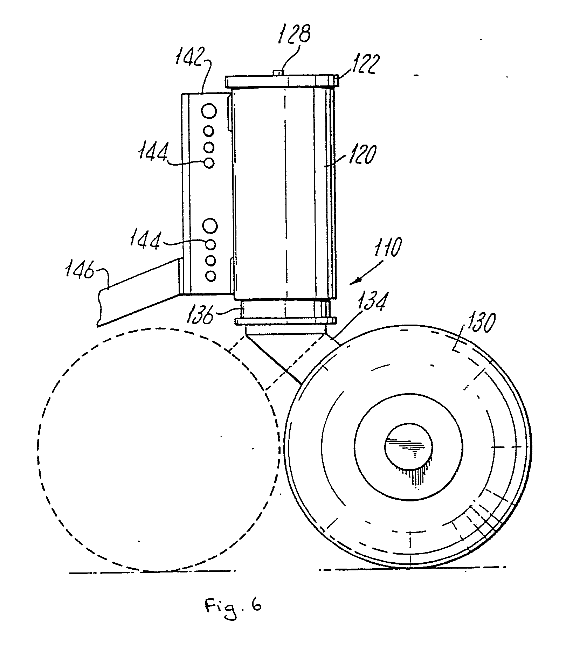

In use, in normal forwards running, the wheels will be located to the rear of the framework, as illustrated in full lines in Figure 6. However, on reversing, the wheels will swivel around to the position shown in dashed lines in that Figure.

In the illustrated embodiment, the wheels are 12" (310mm) or 13" (330mm) in diameter.

Although not illustrated, it is not possible to mount a disc brake attachment on the stub-axle 132 of each wheel, inboard of the arm 134.

A tow-bar 138 is bolted to the rear face of the lower transverse member 114 and is provided at its free end with a conventional towing ball 140 to permit attachment of the hitch 110 to the caravan or the like by use of a conventional towing socket provided on a towing frame extending from the front end of the caravan.

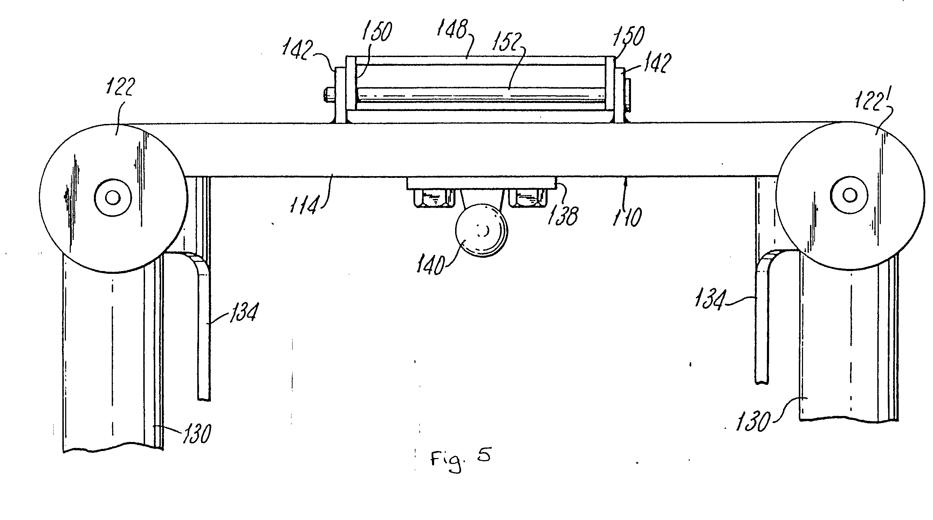

As shown in Figures 5 and 6, the mounting plates 116 extend forwardly beyond the transverse members 114 to form two rectangular protrusions 142. These protrusions 142 each includes two sets of four apertures 144 and are for the purpose of attaching the hitch 110 to the rear of the towing vehicle. To this end the towing vehicle has a towing bracket 146 rigidly secured to the rear thereof, and the towing bracket 146 is connected to a transverse member 148 with two apertured rectangular sideplates 150. The dimensions of the member 148 and plates 150 are such that they will just fit within the protrusions 142 of the hitch so that the hitch 110 can be fixed to the car by aligning the apertures in the protrusions 142 and plates 150, as shown in Figure 6, and passing two connecting pins 152 through the aligned apertures. This is illustrated in Figures 4 and 5, although only one pin, the lower pin, is shown in Figure 1. The pins 152 are then secured in position by passing over centre spring cleat pins (not shown) through apertures in the protruding ends of the pins.

The presence of four holes in each set in the protrusions 142 enables adjustment of the height of the hitch 110 relative to the rear of the towing vehicle, up to a maximum of 200mm.

In use of the hitch, it is secured to the rear of a towing vehicle as described above, and each bag 124 is inflated to a suitable pressure by attaching a suitable pump, eg a foot pump, to connector 128, via an adaptor if necessary The pressure will be selected depending on the towing vehicle, the item of equipment to be towed and the nature of terrain to be covered. With the particular air bags used in the illustrated embodiment, the air pressure will generally be in the range 5—80 psi (0.35—5.62 kg per cm$^2$), enabling carrying of a load of up to one and a half tons (1.52 tonnes). A typical value will be 15 psi (1.05 kg per cm$^2$).

With the caravan or other item of equipment attached to the hitch 110 via towing ball 140, the hitch 110 functions in use to support the forward weight of the towed item. This improves the road-handling of the towing vehicle, eliminating 'wagging' of the rear end, and allows a greater load to be towed by the vehicle than would otherwise be the case. Further, the air bags 124 and piston and cylinder arrangements provide pneumatic suspension and shock absorption of the wheels 130 relative to the framework 112, again improving handling.

The above embodiment may be modified in various ways. For instance, a smaller, narrower version with smaller wheels is envisaged for certain applications.

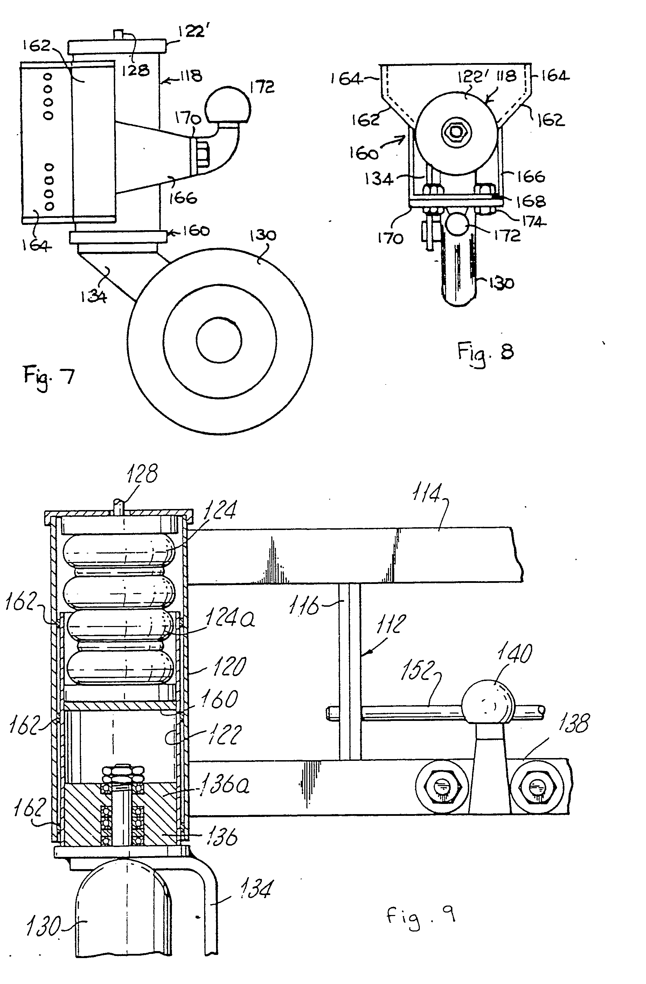

Referring now to Figures 7 and 8, these illustrate a one-wheeled hitch 160. This resembles hitch 110 in many respects, utilising an identical suspension assembly 118 with a wheel 130 mounted on a trailing arm 134, as before.

However, the framework 112 is replaced by a pair of angled mounting brackets 162 welded to the tubular housing 120 and extending forwardly. As shown in Figure 7, the brackets 162 include apertured rectangular portions 164 corresponding to the rectangular protrusions of hitch 110 to enable attachment of the hitch 160 to mounting plates 150 in the manner described above.

The only difference with this embodiment is that the rectangular portions are slightly closer together and are adapted to fit snugly within plates 50, rather than outside as before.

A pair of arms 166 extend rearwardly from the brackets 162 and are linked by transverse members 168. A two-bar 170 provided with a towing ball 172 is secured to the transverse member 168 by means of bolts at 174.

The hitch 60 is used in an identical manner to hitch 110. Figure 9 illustrates a hitch which is generally similar to hitch 110 illustrated in Figures 4, 5 and 6. Like components have been designated by like reference numerals.

The points of difference between the two hitches are as follows:

In the present embodiment two air bags 124 and 124a, connected to one another in series, are located between the tubular housing 120 and inner cylindrical member 122. The upper end of air bag 124 is secured to the housing end cap as before, but the lower end of air bag 124a is secured to a platform 160 within the inner member 122. It is to be noted that the two air bags are illustrated in compressed condition.

The air bags used in this embodiment are both 4½" (115mm) convolute bellow air spring assemblies, manufactured by Dunlop. Each is capable of 3½" (90mm) movement, giving a total of 7" (180mm) permitted movement.

Further two ball-race bearings 136 and 136a are provided in the present embodiment as these are found necessary to give sufficient strength and rigidity.

As shown, a larger gap is provided between the outer housing 120 and inner member 122. The inner member 122 is produced by a rolling process with an accurately produced outside diameter of 4¾" (120mm). The outer housing 120 has an inside diameter produced to less close tolerances, being nominally 5" (126mm). The gap between these components is sealed by three Tufnol rings 162 machined to suit the outer housing inside diameter. As mentioned above, lubrication involves watering once a month.

Although not shown, the transverse members 114 are preferably in the form of respective oval section tubes. Each tube extends across the framework 112 as before, but at its end is curved around the front of housings 120 and secured thereto.

Finally, the trailing arms 134 are preferably also formed of tube to reduce weight and cost.

## Claims

1. A hitch for attaching an item of equipment to be towed to a towing vehicle, comprising a framework (16) carried by at least one road wheel or roller (26) for locating between the rear of the towing vehicle (14) and the forward end of the item to be towed (12); a tow-bar (34) secured with respect to the framework (16) for attachment to the item to be towed (12); connecting means (42, 44) for detachably joining the framework (16) to the rear of the towing vehicle (14); and suspension means whereby the or each roadwheel or roller (26) is independently resiliently mounted relative to the framework (16), characterised by means for varying the resilience of the suspension means to suit the load applied to the hitch by the item to be towed.

2. A hitch according to claim 1, characterised in that a single pair of road wheels (26) is provided on the framework (16).

3. A hitch according to claim 2, characterised in that the wheels (26) of the pair are arranged for independent movement with respect to respective independent vertical axes.

4. A hitch according to claim 1, 2 or 3, characterised in that the wheel(s) or roller(s) (26) is/are mounted relative to the framework by pneumatic suspension means (118).

5. A hitch according to claims 4, characterised in that the pneumatic suspension comprises a piston and cylinder arrangement (120, 122) with an air bag (124) located therebetween.

6. A hitch according to claim 5, characterised in that the air bag (124) is a convolute bellow air spring assembly.

7. A hitch according to claim 4, 5 or 6, characterised in that each air suspension means includes two independent air bags to increase the compressibility of the suspension before 'bottoming' occurs.

8. A hitch according to any one of the preceding claims, characterised in that the means (42, 44) for joining the framework to the rear of a towing vehicle comprises an attachment member (42) adapted to be rigidly secured to one or more mounting plates (44) fixed to the rear of the towing vehicle (14) and also to be rigidly secured to the framework (16) in such a manner that the framework can be quickly and easily detached from the attachment member and hence from the towing vehicle.

## Patentansprüche

1. Eine Kupplung zum Anhängen eines zu ziehenden Ausrüstungsgegenstandes an ein Zugfahrzeug mit einem von mindestens einem Straßenrad oder einer Straßenrolle (26) getragenen Rahmen (16) zur Anbringung zwischen der Rückseite des Zugfahrzeuges (14) und dem vorderen Ende des zu ziehenden Gegenstandes (12), mit einer gegenüber dem Rahmen (16) befestigten Zugstange (34) zum Anhängen an den ziehenden Gegenstand (12), mit Verbindungseinrichtungen (42, 44) zum lösbaren Ankuppeln des Rahmens (16) an die Rückseite des Zugfahrzeuges (14) und mit Aufhängeeinrichtungen, mit denen das oder jedes Straßenrad oder jede Straßenrolle (26) gegenüber dem Rahmen (16) unabhängig federnd gehalten wird, gekennzeichnet durch Einrichtungen zum Verändern der Federkraft der Aufhängeeinrichtungen zum Anpassen der an die Kupplung durch den zu ziehenden Gegenstand angelegten Last.

2. Eine Kupplung nach Anspruch 1, dadurch gekennzeichnet, daß ein einziges Paar von Straßenrädern (26) am Rahmen (16) vorgesehen ist.

3. Eine Kupplung nach Anspruch 2, dadurch gekennzeichnet, daß die Räder (26) des Paares gegenüber unabhängigen vertikalen Achsen unabhängig beweglich angeordnet sind.

4. Eine Kupplung nach Anspruch 1, 2 oder 3, dadurch gekennzeichnet, daß das Rad (die Räder) oder die Rolle (die Rollen) (26) durch pneumatische Aufhängeeinrichtungen (118) gegenüber dem Rahmen gehalten ist (sind).

5. Eine Kupplung nach Anspruch 4, dadurch gekennzeichnet, daß die pneumatische Aufhängung eine Kolben- und Zylinderanordnung (120, 122) mit einem dazwischen angeordneten Luftsack (124) umfaßt.

6. Eine Kupplung nach Anspruch 5, dadurch gekennzeichnet, daß der Luftsack (124) eine Faltenbalg-Luftfederanordnung ist.

7. Eine Kupplung nach Anspruch 4, 5 oder 6, dadurch gekennzeichnet, daß jede Luftaufhängungseinrichtung zwei unabhängige Luftsäcke zum Vergrößern der Zusammendrückbarkeit der Aufhängung vor einem "Aufschlagen auf den Boden" enthält.

8. Eine Kupplung nach irgendeinem der vorhergehenden Ansprüche, dadurch gekennzeichnet, daß die Einrichtung (42, 44) zum Ankuppeln des Rahmens an die Rückseite eines Zugfahrzeuges ein Anhängeglied (42) enthält, das sich an ein oder mehrere an der Rückseite des Zugfahrzeuges (14) fixierten Montageplatten (44) starr befestigen läßt und auch an dem Rahmen (16) in solcher Weise starr befestigen läßt, daß der Rahmen schnell und einlach von dem Anhängeglied und damit vom Zugfahrzeug gelöst werden kann.

**Revendications**

1. Dispositif d'attelage pour accrocher une remorque à un véhicule tracteur, comportant une ossature (16) portée par au moins une ou roulette (26) localisée entre l'arrière du véhicule tracteur (14) et l'avant de la remorque (12); une barre d'attelage (34) fixée sur l'ossature (16) et destinée à être accrochée sur la remorque (12); des moyens de connection (42, 44) propres à monter de façon amovible l'ossature (16) sur l'arrière du véhicule tracteur (14); et des moyens de suspension permettant de monter de façon indépendante et élastique chaque roue ou roulette (26) sur l'ossature (16), caractérisé en ce qu'il comprend des moyens pour modifier l'élasticité des moyens de suspension en fonction de la charge appliquée au dispositif d'attelage par la remorque.

2, Dispositif d'attelage selon la revendication 1, caractérisé en ce qu'une paire unique de roues (26) est prévue sur l'ossature (16).

3. Dispositif d'attelage selon la revendication 2, caractérisé en ce que les roues (26) de la paire sont conçues de façon à pouvoir se déplacer indépendamment par rapport à respectivement des axes verticaux indépendants.

4. Dispositif d'attelage selon l'une quelconque des revendications 1, 2 et 3, caractérisé en ce que la (ou les) roue(s) ou roulette(s) (26) est (sont) montée(s) sur l'ossature à l'aide de moyens de suspension pneumatiques (118).

5. Dispositif d'attelage selon la revendication 4, caractérisé en ce que les moyens de suspension pneumatiques comprennent l'ensemble d'un piston et d'un cylindre (120, 122) avec interposition d'une poche d'air (124).

6. Dispositif d'attelage selon la revendication 5, caractérisé en ce que la poche d'air (124) est un ressort du type des soufflets pneumatiques à spires.

7. Dispositif d'attelage selon l'une quelconque des revendications 4, 5 et 6, caractérisé en ce que chacun des moyens de suspension pneumatiques comprend deux poches d'air indépendantes de façon à accroître la compressibilité de la suspension avant "le contact du fond".

8. Dispositif d'attelage selon l'une quelconque des précédentes revendications, caractérisé en ce que les moyens (42, 44) pour monter l'ossature sur l'arrière du véhicule tracteur comprennent un élément d'accrochage (42) propre à être assujetti rigidement sur une ou plusieurs plaques de montage (44) fixées à l'arrière du véhicule tracteur (14) et également à être assujetti rigidement sur l'ossature (16) de façon telle que l'ossature puisse être décrochée rapidement et facilement de l'élément d'accrochage et par suite du véhicule tracteur.

FIG. 1

FIG. 2

FIG. 3

Fig. 4

3

Fig. 5

0 049 587

Fig. 6

0 049 587

Fig. 7

Fig. 8

Fig. 9

6